# EUROPÄISCHE PATENTSCHRIFT

(11) **EP 1 624 016 B1**
(45) Veröffentlichungstag und Bekanntmachung des Hinweises auf die Patenterteilung: **08.07.2015**
(21) Anmeldenummer: 05015178.6
(22) Anmeldetag: 13.07.2005
(51) Int. Cl.: C08K 5/5313, C08K 5/00, C07F 9/30

(54) **Nanoteiliges Phosphor-haltiges Flammschutzmittel**
Nanoscalar phosphorous containing fire retardant
Agents d'ignifugation nanopacticulaire contenant du phosphore

(30) Priorität: 22.07.2004 DE 102004035517
(43) Veröffentlichungstag der Anmeldung: 08.02.2006
(73) Patentinhaber: Clariant Produkte (Deutschland) GmbH, 65929 Frankfurt am Main (DE)
(72) Erfinder: Bauer, Harald, Dr., 50170 Kerpen (DE); Krause, Werner, Dr., 50354 Hürth (DE); Sicken, Martin, Dr., 51149 Köln (DE); Weferling, Norbert, Dr., 50354 Hürth (DE)

(56) Entgegenhaltungen:
- EP-A- 1 396 523
- EP-A- 1 544 205
- EP-A- 1 586 619
- DE-A1- 19 629 432

## Beschreibung

Die Erfindung betrifft ein nanoteiliges phosphorhaltiges Flammschutzmittel, ein Verfahren zur Herstellung von diesen Produkten und ihre Verwendung.

Nanocomposites von Kunststoffen und nanoteiligen Füllstoffen (Nanofiller) zeigen aufgrund ihrer besonderen Struktur außergewöhnliche Eigenschaftsverbesserungen, u.a. Erhöhung der Steifigkeit und Verbesserung der Schlagzähigkeit von Kunststoffformteilen.

Bekannte Nanofiller sind organisch modifizierte Schichtsilicate (Bentonite, Montmorillonite, Hectorite, Saponite etc).

Nachteilig ist, dass mit ihnen allein kein ausreichender Flammschutz erreicht werden kann, da sie lediglich als Inertsubstanz wirken.

Es sind daher in der Literatur Versuche beschrieben, Nanofiller mit anderen Flammschutzmitteln zu kombinieren, mit dem Ziel verbesserter mechanischer Elastizitätswerte und Flammschutz.

Ziel ist dabei die flammgeschützte Polymerschmelze mit Nanofiller zu stabilisieren und die Glühdrahtentzündungstemperatur (GWIT) anzuheben. Nachteilig ist, dass der Nanofiller als Inertsubstanz wirkt und additiv zum Flammschutzmittel eingesetzt werden muss. Dadurch wird der Festkörperanteil im flammgeschützten Polymerformkörper erhöht, worunter wiederum die mechanischen Elastizitätswerte leiden.

Überraschend wurde nun gefunden, dass allein durch Verwendung von nanoteiligem Flammschutzmittel die Glühdrahtentzündungstemperatur erhöht werden kann. Daher kann auf das organisch interkalierte Schichtsilikat verzichtet werden. Solchermaßen kann der Festkörperanteil in der flammgeschützten Polymerformmasse gesenkt werden. Dadurch lassen sich flammgeschützte Polymerformkörper mit deutlich verbesserten mechanischen Elastizitätswerten herstellen.

Überraschend wurde weiterhin gefunden, dass das erfindungsgemäße nanoteilige phosphorhaltige Flammschutzmittel in transparenten Kunststoffen die Lichtdurchlässigkeit im Vergleich zu nicht-nanoteiligen phosphorhaltigen Flammschutzmitteln erhöht.

Die Erfindung betrifft daher ein nanoteiliges phosphorhaltiges Flammschutzmittel gemäß Anspruch 1, dadurch gekennzeichnet, dass es ein Phosphinsäuresalz der Formel (I) und/oder ein Diphosphinsäuresalz der Formel (II) und/oder deren Polymere, enthält 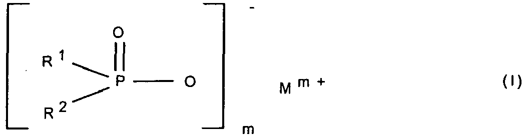 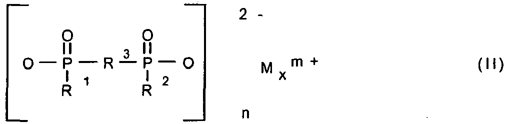 worin
- R¹, R²: gleich oder verschieden sind und C₁-C₆-Alkyl, linear oder verzweigt und/oder Aryl;
- R³: C₁-C₁₀-Alkylen, linear oder verzweigt, C₆-C₁₀-Arylen, -Alkylarylen oder -Arylalkylen;
- M: Mg, Ca, Al, Sb, Sn, Ge, Ti, Fe, Zr, Zn, Ce, Bi, Sr, Mn, Li, Na, K und/oder eine protonierte Stickstoffbase;
- m: 1 bis 4;
- n: 1 bis 4;
- x: 1 bis 4
bedeuten.

Bevorzugt bedeutet M Aluminium, Calcium, Titan, Zink, Zinn oder Zirkonium. Unter protonierten Stickstoffbasen werden bevorzugt die protonierten Basen von Ammoniak, Melamin, Triethanolamin, insbesondere NH₄⁺, verstanden.

Bevorzugt sind R¹, R² gleich oder verschieden und bedeuten C₁-C₆-Alkyl, linear oder verzweigt und/oder Phenyl.

Besonders bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Bevorzugt bedeutet R³ Methylen, Ethylen, n-Propylen, iso-Propylen, n-Butylen, tert.-Butylen, n-Pentylen, n-Octylen oder n-Dodecylen.

Bevorzugt bedeutet R³ auch Phenylen oder Naphthylen.

Bevorzugt bedeutet R³ auch Methyl-phenylen, Ethyl-phenylen, tert.-Butylphenylen, Methyl-naphthylen, Ethyl-naphthylen oder tert.-Butylnaphthylen.

Bevorzugt bedeutet R³ auch Phenyl-methylen, Phenyl-ethylen, Phenyl-propylen oder Phenyl-butylen.

Bevorzugte Phosphinsäuresalze sind Aluminiumtrisdiethylphosphinat, Aluminiumtrismethylethylphosphinat, Aluminiumtrisdiphenylphosphinat und Mischungen davon.

Bevorzugte Aluminiumtrisdiethylphosphinate enthalten 0,01 bis 10 % Nebenbestandteile aus der Gruppe Aluminium-Ethylbutylphosphinat, Aluminium-Ethylphosphonat, Aluminiumphosphit und/oder Aluminiumhypophosphit.

Bevorzugte Phosphinsäuresalze sind auch Zinkbisdiethylphosphinat, Zinkbismethylethylphosphinat, Zinkbisdiphenylphosphinat und Mischungen davon. Bevorzugte Zinkbisdiethylphosphinate enthalten 0,01 bis 10 % Nebenbestandteile aus der Gruppe Zink-Ethylbutylphosphinat, Zink-Ethylphosphonat, Zinkphosphit und/oder Zinkhypophosphit.

Bevorzugte Phosphinsäuresalze sind auch Titanylbisdiethylphosphinat, Titantetrakisdiethylphosphinat, Titanylbismethylethylphosphinat, Titantetrakismethylethylphosphinat, Titanylbisdiphenylphosphinat, Titantetrakisdiphenylphosphinat und beliebige Mischungen davon.

Das erfindungsgemässe nanoteilige phosphorhaltige Flammschutzmittel enthält 0,01 bis 10 Gew.-% Schutzkolloide und/oder Kristallisationsmodifikatoren, wobei es sich um polymere quaternäre Ammoniumsalze, Gallussäure, Gelatine, Polyethylensorbitmonooleat, Natriumcarboxymethylcellulose, Polyvinylpyrrolidon, und/oder Natriumpyrophosphat handelt.

Die mittlere Teilchengröße (d₅₀) des erfindungsgemäßen nanoteiligen phosphorhaltigen Flammschutzmittels beträgt 1 bis 1000 nm, besonders bevorzugt 10 bis 500 nm.

Die Oberfläche des erfindungsgemäßen nanoteiligen phosphorhaltigen Flammschutzmittels beträgt nach BET 2 bis 1000qm/g, besonders bevorzugt 5 bis 500 qm/g.

Die bevorzugte Schüttdichte des erfindungsgemäßen nanoteiligen phosphorhaltigen Flammschutzmittels beträgt 10 bis 1000 g/l, besonders bevorzugt 40 bis 400 g/l.

Die bevorzugte Restfeuchte des erfindungsgemäßen nanoteiligen phosphorhaltigen Flammschutzmittels beträgt 0,01 bis 10 Gew.-%, besonders bevorzugt 0,1 bis 1 %. Die erfindungsgemäßen nanoteiligen phosphorhaltigen Flammschutzmittel haben bevorzugte L-Farbwerte von 85 bis 99,9, besonders bevorzugt 90 bis 98. Nanoteilige phosphorhaltige Flammschutzmittel mit L-Werten unterhalb des erfindungsgemäßen Bereiches erfordern einen höheren Weißpigmenteinsatz. Dieser verschlechtert die mechanischen Stabilitätseigenschaften des Polymerformkörpers (z.B. E-Modul). Die erfindungsgemäßen nanoteiligen phosphorhaltigen Flammschutzmittel haben bevorzugte a-Farbwerte von -4 bis +9, besonders bevorzugt -2 bis +6.

Die erfindungsgemäßen nanoteiligen phosphorhaltigen Flammschutzmittel haben bevorzugte b-Farbwerte von -2 bis +6, besonders bevorzugt -1 bis +3.

Die Farbwerte werden im System nach Hunter (CIE-LAB-System, Commission Internationale d'Eclairage) angegeben. L-Werte gehen von 0 (schwarz) bis 100 (weiß), a-Werte von -a (grün) bis +a (rot) und b-Werte von -b (blau) bis +b (gelb). Nanoteilige phosphorhaltige Flammschutzmittel mit a- bzw. b-Werten außerhalb des erfindungsgemäßen Bereiches erfordern einen höheren Weißpigmenteinsatz. Dieser verschlechtert die mechanischen Stabilitätseigenschaften des Polymerformkörpers (z.B. E-Modul).

Besonders bevorzugt liegt das erfindungsgemäße Nanoteilige phosphorhaltige Flammschutzmittel auch in Körpern vor, deren Länge zu Durchmesser-Verhältnis 1 zu 1 bis 1.000.000 zu 1 beträgt. Diese werden häufig auch Nanofibres (Nanofasern) genannt.

Bevorzugt liegt das nanoteilige phosphorhaltige Flammschutzmittel dispergiert in Polymeren vor.

Bevorzugt hat das nanoteilige phosphorhaltige Flammschutzmittel vor dem Dispergieren in Polymeren bereits die endgültige Teilchengröße. Diese wird durch geeignete Herstellverfahren erzielt.

Die Erfindung betrifft auch ein Verfahren zur Herstellung des erfindungsgemäßen nanoteiligen phosphorhaltigen Flammschutzmittels gemäß Anspruch 3, dadurch gekennzeichnet, dass
A) eine Aluminium-/Zink-/Titan-/Zirkonium- und/oder Zinnverbindung mit
B) einer löslichen Verbindung der Phosphinsäure der Formel (I) und/oder einer Diphosphinsäure der Formel (II) und/oder deren Polymere und ggf.
C) 0,01 bis 10 Gew.-% Schutzkolloide und/oder Kristallisationsmodifikatoren zur Reaktion gebracht werden und wahlweise von dem Lösungsmittel und/oder von Nebenkomponenten abgetrennt, getrocknet und gemahlen wird.

Die Erfindung betrifft auch ein weiteres Verfahren zur Herstellung des erfindungsgemäßen nanoteiligen phosphorhaltigen Flammschutzmittels, dadurch gekennzeichnet, dass
A) eine Aluminium-/Titan-/Zink-/Zinn- und/oder Zirkoniumverbindung hydrolysiert und dann
B) mit einer löslichen Verbindung der Phosphinsäure der Formel (I) und/oder ein Diphosphinsäure der Formel (II) und/oder deren Polymere umgesetzt wird oder bereits in deren Gegenwart hydrolysiert wird und wahlweise von dem Lösungsmittel abgetrennt, von Nebenkomponenten abgetrennt, getrocknet und gemahlen wird.

Bevorzugt wird bei diesen Verfahren die Reaktion in einem Mikroreaktor und/oder Minireaktor ausgeführt.

Bevorzugt werden dabei die Komponenten A) und B) im Verhältnis A zu B von 100 zu 1 bis 1 zu 100 bevorzugt im Verhältnis A zu B von 10 zu 1 bis 1 zu 10 Ladungsäquivalent Metall/Mol Phosphor eingesetzt.

Bevorzugt beträgt dabei die Temperatur 0 bis 300°C, die Reaktionszeit 1*10⁻⁷ bis 1*10² h und der Druck 1 und 200 MPa.

Bevorzugt beträgt der Durchsatz (Volumenstrom) in einem Mikroreaktor 10⁻³ l/h bis 10³ l/h und in einem Minireaktor 10² l/h bis 10⁵ l/h.

Die Erfindung betrifft auch ein weiteres Verfahren zur Herstellung von erfindungsgemäßem nanoteiligem phosphorhaltigem Flammschutzmittel, welches dadurch gekennzeichnet ist, dass nicht nanoteiliges phosphorhaltigen Flammschutzmittel der Nassmahlung unterworfen wird, und dadurch seine Teilchengröße auf 1 bis 1000 nm, bevorzugt 5 bis 500 nm, gebracht wird, ggf. unter Zusatz von 0,01 bis 10 Gew.-% Schutzkolloide und/oder Kristallisationsmodifikatoren, und wahlweise von dem Lösungsmittel abgetrennt, von Nebenkomponenten abgetrennt, getrocknet und gemahlen wird.

Bevorzugt wird hierbei ein nicht nanoteiliges phosphorhaltiges Flammschutzmittel in einer Konzentration von 0,1 bis 50 Gew.-%, bevorzugt 1 bis 20 Gew.-% in einem Lösungsmittel dispergiert, wobei die Temperatur 0 bis 300°C, die Reaktionszeit 1*10⁻⁷ bis 1*10² h und der Druck 1 und 200 MPa beträgt.

Bevorzugt erfolgt die Abtrennung des nanoteiligen phosphorhaltigen Flammschutzmittels vom Lösungsmittel durch Filtration, Sedimentation, Zentrifugation.

Bevorzugt erfolgt die Abtrennung des nanoteiligen phosphorhaltigen Flammschutzmittels von Nebenkomponenten durch Versetzen mit Lösungsmittel im Verhältnis 1 zu 100 bis 100 zu 1 Gewichtsteilen und Abtrennung des nanoteiligen phosphorhaltigen Flammschutzmittels vom Lösungsmittel durch Filtration, Sedimentation und/oder Zentrifugation.

Bevorzugt erfolgt die Trocknung einstufig oder mehrstufig bei einem Druck von 10 Pa bis 100 MPa, über eine Zeitdauer von 0,01 bis 1000h und einer Temperatur von -20 bis +500°C, bevorzugt bei 50 bis 350°C.

Bevorzugt erfolgt die Mahlung mittels Hammermühlen, Prallmühlen Schwingmühlen, Kugelmühlen, Walzen- und Pendelrollmühlen und/oder Luftstrahlmühlen.

Bevorzugt beträgt die Konzentration an Komponente B im erfindungsgemäßen Lösungsmittel 0,1 bis 50 Gew.-% besonders bevorzugt 1 bis 30 Gew.-% Phosphor.

Bevorzugt handelt es sich bei den Aluminium-/ Titan-/Zink-/Zinn- und/oder Zirkoniumverbindungen um organische Verbindungen.

Die Erfindung betrifft auch die Verwendung von erfindungsgemäßem nanoteiligem phosphorhaltigem Flammschutzmittel in Polymerformmassen, Polymerformkörpern, Polymerfäden, Polymerfilmen und/oder Polymerfasern.

Die Erfindung betrifft auch die Verwendung von erfindungsgemäßem nanoteiligem phosphorhaltigem Flammschutzmittel in flammgeschützten Beschichtungen, Formulierungen zur Herstellung von flammgeschützten Beschichtungen (Gelcoats, Intumeszenz-Lacke, Klarlacke, Topcoats, Klebern, Adhäsionsbeschichtungen) und Imprägniermitteln von porösen Formkörpern wie Holz, Spanplatten, Kork, Papier und Textilien).

Bevorzugt handelt es sich bei Komponente A um Aluminium-, Zink-, Titan-, Zirkonium- und/oder Zinnverbindungen mit anorganischen Anionen der siebten Hauptgruppe (Halogenide) wie z.B. Fluoride, Chloride, Bromide, lodide; mit Anionen der Oxosäuren der siebten Hauptgruppe (Hypohalogenite, Halogenite, Halogenate, z.B. lodat, Perhalogenate, z.B. Perchlorat); mit Anionen der sechsten Hauptgruppe (Chalgogenide) wie z.B. Oxide, Hydroxide, Peroxide, Superoxide; mit Anionen der Oxosäuren der sechsten Hauptgruppe (Sulfate, Hydrogensulfate, Sulfathydrate, Sulfite, Peroxosulfate); mit Anionen der fünften Hauptgruppe (Pnicogenide) wie z.B. Nitride, Phosphide; mit Anionen der Oxosäuren der fünften Hauptgruppe (Nitrat, Nitrathydrate, Nitrite, Phosphate, Peroxophosphate, Phosphite, Hypophosphite, Pyrophosphate); mit Anionen der Oxosäuren der vierten Hauptgruppe (Carbonate, Hydrogencarbonate, Hydroxidcarbonate, Carbonathydrate, Silicate, Hexafluorosilicate, Hexafluorosilicathydrate, Stannate); mit Anionen der Oxosäuren der dritten Hauptgruppe (Borate, Polyborate, Peroxoborate); mit Anionen der Pseudohalogenide (Thiocyanate, Cyanate, Cyanide); mit Anionen der Oxosäuren der Übergangsmetalle (Chromate, Chromite, Molybdate, Permanganat).

Bevorzugt handelt es sich bei Komponente A um Aluminium-, Zink-, Titan-, Zirkonium- und/oder Zinnverbindungen mit organischen Anionen aus der Gruppe der Mono-, Di-, Oligo-, Polycarbonsäuren (Salze der Ameisensäure (Formiate), der Essigsäure (Acetate, Acetathydrate), der Trifluoressigsäure (Trifluoracetathydrate), Propionate, Butyrate, Valerate, Caprylate, Oleate, Stearate, der Oxalsäure (Oxalate), der Weinsäure (Tartrate), Citronensäure (Citrate, basische Citrate, Citrathydrate), Benzoesäure (Benzoate), Salicylate, Milchsäure (Lactat, Lactathydrate), Acrylsäure, Maleinsäure, Bernsteinsäure, von Aminosäuren (Glyzin), von sauren Hydroxofunktionen (Phenolate etc), Para-Phenolsulfonate, Para-Phenolsulfonathydrate, Acetylacetonathydrate, Tannate, Dimethyldithiocarbamate, Trifluormethansulfonat, Alkylsulfonate, Aralkylsulfonate.

Bevorzugt handelt es sich bei Komponente A um Aluminium-, Zink-, Titan-, Zirkonium- und/oder Zinnverbindungen mit Anionen aus der Gruppe der Monoorganylphosphinate wie Mono-(C₁₋₁₈-Alkyl)-Phosphinate, Mono-(C₆-C₁₀-Aryl)-Phosphinate, Mono-(C₁₋₁₈-Aralkyl)-Phosphinate z.B. Monomethylphosphinate Monoethylphosphinate, Monobutylphosphinate, Monohexylphosphinate, Monophenylphosphinate, Monobenzylphosphinate etc.

Bevorzugt handelt es sich bei Komponente A um Aluminium-, Zink-, Titan-, Zirkonium- und/oder Zinnverbindungen mit Anionen aus der Gruppe der Monoorganylphosphonate wie Mono-(C₁₋₁₈-Alkyl)-Phosphonate, Mono-(C₆-C₁₀-Aryl)-Phosphonate, Mono-(C₁₋₁₈-Aralkyl)-Phosphonate z.B. Monomethylphosphonate Monoethylphosphonate, Monobutylphosphonate, Monohexylphosphonate, Monophenylphosphonate, Monobenzylphosphonate etc.

Bevorzugt ist Komponente B eine lösliche Verbindung der Phosphinsäure der Formel (I) und/oder ein Diphosphinsäure der Formel (II) und/oder deren Polymere.

Löslich bedeutet, dass sich Komponente B im erfindungsgemäßen Lösungsmittel zu einer Lösung mit einer Konzentration an B von 0,1 bis 50 Gew.-% Phosphor löst.

Bei der Reaktion der Komponenten A und B werden 0,01 bis 10 Gew.-% Schutzkolloide und / oder Kristallisationsmodifikatoren, bezogen auf nanoteiliges phosphorhaltiges Flammschutzmittel, eingesetzt.

Die Schutzkolloide und/oder Kristallisationsmodifikatoren sind z.B. polymere quaternäre Ammoniumsalze (®Genamin PDAC, Fa. Gallussäure, Gelatine, Polyethylensorbitmonooleat (®Polysorbate 80), Natriumcarboxymethylcellulose, Polyvinylpyrrolidon, und/oder Natriumpyrophosphat.

Das erfindungsgemäße nanoteilige phosphorhaltige Flammschutzmittel enthält 0,01 bis 10 Gew.-% Schutzkolloide und/oder Kristallisationsmodifikatoren.

Verfahren zur Herstellung von nanoteiligem phosphorhaltigem Flammschutzmittel durch Sol-Gel-Prozess:

Ein erfindungsgemäß bevorzugtes Verfahren zur Herstellung von nanoteiligem phosphorhaltigem Flammschutzmittel ist die des Sol-Gel Prozesses wobei eine Komponente A hydrolysiert und dann mit einer Komponente B umgesetzt wird. In einer anderen Ausgestaltung wird Komponente A in Gegenwart von Komponente B hydrolysiert.

Bevorzugte Komponenten A sind Aluminium-/Titan-/Zink-/Zinn- und/oder Zirkoniumverbindungen. Bevorzugte Komponenten B sind lösliche Verbindungen der Phosphinsäure der Formel (I) und/oder eine Diphosphinsäure der Formel (II) und/oder deren Polymere.

Bevorzugte Komponenten A sind Aluminium-/Titan-/Zink-/Zinn- und/oder Zirkonium-Organische Verbindungen.

Bevorzugte Aluminium-/Titan-/Zink-/Zinn- und/oder Zirkonium-Organische Verbindungen sind Aluminium-/Titan-/Zink-/Zinn- und/oder Zirkoniumalkoxide.

Bevorzugte Aluminium-Alkoxide sind Aluminium-n-butoxid, Aluminium-sec-butoxid, Aluminium-tert-butoxid, und/oder Aluminium-isopropoxid

Bevorzugte Titan-Alkoxide sind Titan-(IV)-n-propoxid (®Tilcom NPT, Vertec NPT), Titan-(IV)-n-butoxid, Titanchloridtriisopropoxid, Titan-(IV)-ethoxid, Titan-(IV)-2-ethylhexyloxid (®Tilcom EHT, ®Vertec EHT)

Bevorzugtes Zinn-Alkoxid ist Zinn-(IV)-tert-butoxid

Bevorzugtes Zirkonium-Alkoxid ist Zirkon-(IV)-tert-butoxid

Bevorzugt ist dabei die Verwendung von Acetylacetonat als Chelatisierungsmittel.

Bevorzugt wird ein erfindungsgemäßes Lösungsmittel oder Mischungen von erfindungsgemäßen Lösungsmitteln eingesetzt.

Bevorzugt beträgt die Konzentration an die Komponente A in erfindungsgemäßem Lösungsmittel 0,1 bis 50 Gew.-% Metall.

Bevorzugt beträgt die Konzentration an die Komponente A in erfindungsgemäßem Lösungsmittel 0,1 bis 50 Gew.-% Phosphor.

Bevorzugt ist auch die Herstellung von nanoteiligem phosphorhaltigem Flammschutzmittel durch Nassmahlung.

Bevorzugt wird dazu erfindungsgemäßes nicht nanoteiliges phosphorhaltiges Flammschutzmittel in einer Konzentration von 0,1 bis 50 Gew.-%, bevorzugt 1 bis 20 Gew.-% in einem erfindungsgemäßen Lösungsmittel dispergiert. Bevorzugtes erfindungsgemäßes nicht nanoteiliges phosphorhaltiges Flammschutzmittel hat eine mittlere Teilchengröße (d50) von 1 µm bis 100 µm. Bevorzugt liegt erfindungsgemäßes nicht nanoteiliges phosphorhaltiges Flammschutzmittel in nicht spärolithischer (kugelförmiger) Form vor. Bevorzugt ist eine Stäbchenform, wobei der Quotient von Länge dividiert durch Dicke von 1 bis 100 beträgt, besonders bevorzugt bis 2 bis 10.

Bevorzugt werden bei der Nassmahlung des nicht nanoteiligen phosphorhaltigen Flammschutzmittels 0,01 bis 10 Gew.-% Schutzkolloide und/oder Kristallisationsmodifikatoren, bezogen auf nanoteiliges phosphorhaltiges Flammschutzmittel, eingesetzt.

Bevorzugtes Aggregat ist z.B. eine Sweco M-45 Mühle, Zirkulationsmühle System ZETA™ der Fa. Netzsch etc.

Der Ausdruck Polymerformmassen ist dabei als synonym zu Composits bzw. Compounds zu verstehen.

Erfindungsgemäß einsetzbare Polymere sind duroplastische und thermoplastische Polymere.

Die vorliegende Erfindung betrifft auch Mischungen des erfindungsgemäßen nanoteiligen phosphorhaltigen Flammschutzmittels mit einem oder mehreren Additiven.

Erfindungsgemäße geeignete Additive sind Kondensationsprodukte des Melamins (z.B. Melam, Melem und/oder Melon) oder Umsetzungsprodukte des Melamins mit Phosphorsäure bzw. Umsetzungsprodukte von Kondensationsprodukten des Melamins mit Phosphorsäure sowie Gemische der genannten Produkte. Kondensationsprodukte des Melamins sind z. B. Melem, Melam oder Melon bzw. höher kondensierte Verbindungen dieses Typs sowie Gemische derselben und können beispielsweise durch ein Verfahren hergestellt werden, wie es in der WO 96/16948 beschrieben ist.

Unter den Umsetzungsprodukten mit Phosphorsäure versteht man Verbindungen, die durch Umsetzung von Melamin oder den kondensierten Melaminverbindungen wie Melam, Melem oder Melon etc. mit Phosphorsäure entstehen. Beispiele hierfür sind Melaminpolyphosphat, Melampolyphosphat und Melempolyphosphat bzw. gemischte Polysalze, wie sie z.B. in der WO 98/39306 beschrieben sind. Die genannten Verbindungen sind bereits aus der Literatur bekannt und können auch durch andere Verfahren als die direkte Umsetzung mit Phosphorsäure hergestellt werden. Melaminpolyphosphat kann zum Beispiel analog WO 98/45364 hergestellt werden durch die Umsetzung von Polyphosphorsäure und Melamin bzw. analog WO 98/08898 durch die Kondensation von Melaminphosphat bzw. Melaminpyrophosphat.

Erfindungsgemäße besonders bevorzugt einsetzbare Additive sind Melaminphosphat, Dimelaminphosphat, Melaminpyrophosphat, Melaminpolyphosphate, Melampolyphosphate, Melempolyphosphate und/oder Melonpolyphosphate.

Erfindungsgemäße bevorzugt einsetzbare Additive sind oligomere Ester des Tris(hydroxyethyl)isocyanurats mit aromatischen Polycarbonsäuren.

Erfindungsgemäße bevorzugt einsetzbare Additive sind stickstoffhaltige Phosphate der Formeln (NH₄)_{y}H_{3-y}PO₄ bzw. (NH₄PO₃)_{z}, mit y gleich 1 bis 3 und z gleich 1 bis 10.000.

Erfindungsgemäße bevorzugt einsetzbare Additive sind Stickstoffverbindungen der Formeln (III) bis (VIII) oder Gemische davon 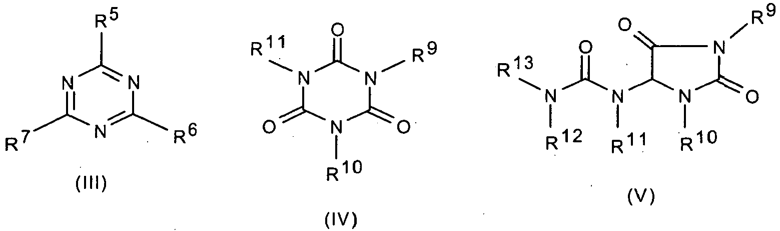 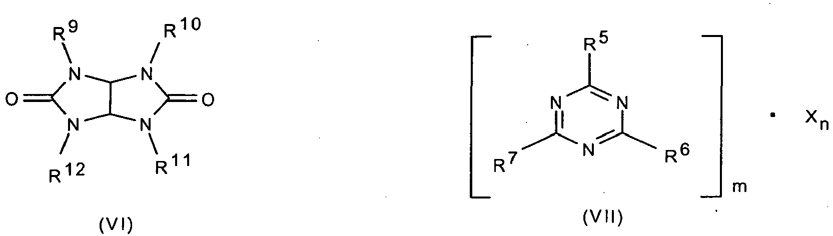 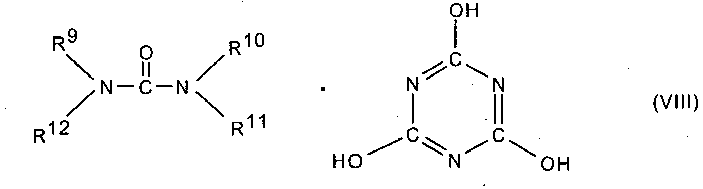 worin
- R⁵ bis R⁷: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
- R⁸: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
- R⁹ bis R¹³: die gleichen Gruppen wie R⁸ sowie -O-R⁸,
- m und n: unabhängig voneinander 1, 2, 3 oder 4,
- X: Säuren, die Addukte mit Triazinverbindungen (III) bilden können, bedeuten.

Erfindungsgemäße bevorzugt einsetzbare Additive sind Benzoguanamin, Tris(hydroxyethyl)isocyanurat, Allantoin, Glycoluril, Melamin, Melamincyanurat, Dicyandiamid und/oder Guanidin.

Erfindungsgemäß einsetzbar sind auch synergistische Kombinationen von den genannten Phosphinaten mit den vorgenannten stickstoffhaltigen Verbindungen, die in einer ganzen Reihe von Polymeren als Flammschutzmittel effektiver wirken, als die Phosphinate allein (DE-A-196 14 424, DE-A-197 34 437 und DE-A-197 37 727). Die Flammschutzwirkung der oberflächenmodifizierten Phosphinate kann durch Kombination mit weiteren Flammschutzmitteln, vorzugsweise stickstoffhaltigen Synergisten oder Phosphor/Stickstoff Flammschutzmitteln verbessert werden.

Bevorzugte Formen für Verstärkungsmaterialien für flammgeschützte Polymerformmassen und flammgeschützte Polymer-Formkörper sind Fasern, Vliese, Matten, Gewebe, Stränge, Bänder, Schläuche, Litzen, Massiv-, Form- und Hohlkörper.

Erfindungsgemäß einsetzbare Lösungsmittel sind bevorzugt Wasser, Alkohole, wie z.B. Methanol, Ethanol, Iso-Propanol, n-Propanol, n-Butanol, Iso-Butanol, t-Butanol, n-Amylalkohol, Iso-Amylalkohol, t-Amylalkohol, n-Hexanol, n-Octanol, Iso- Octanol, n-Tridecanol, Benzylalkohol etc. Bevorzugt sind weiterhin Glykole wie z.B. Ethylenglycol, 1,2-Propandiol, 1,3-Propandiol, 1,3- Butandiol, 1,4-Butandiol, Diethylenglykol etc.; aliphatische Kohlenwasserstoffe wie Pentan, Hexan, Heptan, Octan, und Petrolether, Petroleumbenzin, Kerosin, Petroleum, Paraffinöl etc.; Aromatische Kohlenwasserstoffe wie Benzol, Toluol, Xylol, Mesitylen, Ethylbenzol, Diethylbenzol etc.; Halogenkohlenwasserstoffe wie Methylenchlorid, Chloroform, 1,2-Dichloroethan, Chlorobenzol, Tetrachlorkohlenstoff, Tetrabromoethylen etc.; Alicyclische Kohlenwasserstoffe wie Cyclopentan, Cyclohexan, und Methylcyclohexan etc.; Ether wie Anisol (Methylphenylether), t-Butylmethylether, Dibenzylether, Diethylether, Dioxan, Diphenylether, Methylvinylether, Tetrahydrofuran, Diisopropylether etc.; Glykolether wie Diethylenglycoldiethylether, Diethylenglycoldimethylether (Diglyme), Diethylenglycolmonobutylether, Diethylenglycolmonomethylether, 1,2-Dimethoxyethan (DME Monoglyme), Ethylenglycolmonobutylether, Triethylenglycoldimethylether (Triglyme), Triethylenglycolmonomethylether etc.; Ketone wie Aceton, Diisobutylketon, Methyln-propylketon; Methylethylketon, Methyl-iso-butylketon etc; Ester wie Methylformat, Methylacetat, Ethylacetat, n-Propylacetat und n-Butylacetat etc.; Carbonsäuren wie Ameisensäure, Essigsäure, Propionsäure, Buttersäure etc. Eine oder mehrere dieser Verbindungen können allein oder in Kombination eingesetzt werden.

Durch das erfindungsgemäße Verfahren der Schmelzdispergierung wird nicht nanoteiliges phosphorhaltiges Flammschutzmittel zu nanoteiligem phosphorhaltigem Flammschutzmittel umgewandelt und gleichzeitig im Polymer dispergiert.

Der Begriff Schmelzdispergierung ist synonym zu Extrudieren, Compoundieren und/oder Herstellung eines Masterbatches.

Die Umwandlung von nicht nanoteiligem phosphorhaltigem Flammschutzmittel zu nanoteiligem phosphorhaltigem Flammschutzmittel während der Schmelzdispergierung ist so zu verstehen, dass Kristallagglomerate durch Scherkräfte zerteilt bzw. zermahlen werden.

Durch das erfindungsgemäße Verfahren der Schmelzdispergierung wird in einer anderen Ausgestaltung bereits nanoteiliges phosphorhaltiges Flammschutzmittel im Polymer dispergiert.

Das phosphorhaltige Flammschutzmittel kann in thermoplastische Polymere eingearbeitet werden, indem z.B. alle Bestandteile als Pulver und / oder Granulat in einem Mischer vorgemischt und anschließend in einem Compoundieraggregat (z.B. einem Doppelschneckenextruder) in der Polymerschmelze homogenisiert werden. Die Komponenten können auch separat über eine Dosieranlage direkt in das Compoundieraggregat eingebracht werden.

Bei der Schmelzdispergierung wird die Dispergierung des Nanoteiligen phosphorhaltigen Flammschutzmittel im Matrixpolymer beeinflusst durch die Zugabe von Compatibilizern, die Mischzeit, die Scherbelastung und die Polymerviskosität.

Die Erfindung betrifft auch eine Suspension von nanoteiligem phosphorhaltigem Flammschutzmittel, hergestellt nach einem der erfindungsgemäßen Verfahren mit einer Konzentration an nanoteiligem phosphorhaltigem Flammschutzmittel von 1 bis 50 Gew.-%.

### Bestimmung der mittleren Teilchengröße

1 g der Feststoffprobe wird mit Hilfe eines Ultraturrax-Mischers wird in Lösung von 3 % Isopropanol in Wasser dispergiert. Die mittlere Teilchengröße wird mit Hilfe der Photokorrelationsspektroskopie unter Verwendung eines Malvern 4700C Instruments bestimmt.

Bestimmung der Teilchengröße des nanoteiligen Flammschutzmittels in der Kunststoffmatrix

Die Probe des Composites wird in einem Röntgenpulverdiffraktometer Philips PW1710 vermessen (CuK_{alpha 2}-Strahlung, Wellenlänge 1,54439 Angström, Beschleunigungsspannung 35kV, Heizstrom 28 mA, Monochromator, Scangeschwindigkeit 3 Grad 2 theta pro Minute). Die mittlere Primärteilchengröße D wird nach Scherrer aus der Linienbreite (beta) des Röntgenreflexes beim Beugungswinkel theta in Höhe der halben Maximalintensität berechnet: D = 1,54439 [Ang]*57,3/(beta*cosinus (theta)) (siehe H. Krischner. Einführung in die Röntgenfeinstrukturanalyse. Vieweg (1987) 106-110).

Herstellung, Verarbeitung und Prüfung von flammgeschützten Polymerformmassen und flammgeschützten Polymerformkörpern

Die Flammschutzmittelkomponenten werden mit dem Polymergranulat und evtl. Additiven vermischt und auf einem Doppelschneckenextruder (ZSK 25 WLE, 14,5 kg/h, 200 U/min, L/D: 4) bei Temperaturen von 170 °C (Polystyrol), 230 bis 260°C (PBT), von 260 C (PA6) bzw. von 260 bis 280 C (PA 66) eingearbeitet. Der homogenisierte Polymerstrang wird abgezogen, im Wasserbad gekühlt und anschließend granuliert.

Nach ausreichender Trocknung werden die Formmassen auf einer Spritzgießmaschine (Typ Aarburg Allrounder) bei Massetemperaturen von 240 bis 270°C (PBT) von 275°C (PA 6) bzw. von 260 bis 290°C (PA 66) zu Prüfkörpern verarbeitet.

Bestimmung der mechanischen Werte an den flammgeschützten Polymerformkörpern

Die Reißdehnung wurde in Anlehnung an DIN EN ISO 527-1 bestimmt.
Die Schlagzähigkeit wurde in Anlehnung an ISO 180 bestimmt.

Bestimmung der Flammschutzeigenschaften an den flammgeschützten Polymerformkörpern

Die Prüfkörper werden anhand des UL 94-Tests (Underwriter Laboratories) auf Flammwidrigkeit (Flammschutz) geprüft und klassifiziert.

An Prüfkörpern aus jeder Mischung wurden die Brandklasse UL 94 (Underwriter Laboratories) an Probekörpern der Dicke 1,5 mm bestimmt.

### Nach UL 94 ergeben sich folgende Brandklassen:

V-0 kein Nachbrennen länger als 10 sec, Summe der Nachbrennzeiten bei 10 Beflammungen nicht größer als 50 sec, kein brennendes Abtropfen, kein vollständiges Abbrennen der Probe, kein Nachglühen der Proben länger als 30 sec nach Beflammungsende

V-1 kein Nachbrennen länger als 30 sec nach Beflammungsende, Summe der Nachbrennzeiten bei 10 Beflammungen nicht größer als 250 sec, kein Nachglühen der Proben länger als 60 sec nach Beflammungsende, übrige Kriterien wie bei V-0

V-2 Zündung der Watte durch brennendes Abtropfen, übrige Kriterien wie bei V-1 nicht klassifizierbar (nkl) erfüllt nicht die Brandklasse V-2.

Der Glow-Wire-Ignition-Test wurde nach IEC 60695-1-13 bestimmt.

### Bestimmung der SV-Zahl (Spezifische Viskosität)

0,5 g der Polymerprobe (z.B. PBT) werden mit 50 ml Dichloressigsäure (LM) in einen 250 ml Erlenmeyerkolben mit Schliffstopfen eingewogen. Die Probe wird unter Rühren bei 25°C über einen Zeitraum von 16h gelöst. Die Lösung wird über eine G1-Glasfritte filtriert. 20 ml der Lösung werden in die Kapillare gefüllt, in das (Ubbelohde) Kapillarviskosimeter eingehängt und auf 25°C temperiert. Der SV-Wert errechnet sich nach der Formel: SV-Wert=100*[Durchlaufzeit (Probenlösung)/Durchlaufzeit (LM)-1].

Statt Dichloressigsäure kann für Polyethylenterephthalat und Polybutylenterephtalat auch ein Gemisch von Phenol und 1,2-Dichlorbenzol (1:1, w/w) oder m-Kresol eingesetzt werden. Für Polyamid können Schwefelsäure, Ameisensäure oder m-Kresol verwendet werden.

### Beispiel 1

In einem Lödige-Mischer werden 99,9 Gew.-Teile Aluminiumdiethylphosphinat 2 mit 0,1 Gew.-Teilen Alkylsiloxan (als 10 %ige Lösung in Ethanol) gemischt und danach 2 h bei 120°C im Trockenschrank getrocknet.

### Beispiel 2

In einem Lödige-Mischer werden 99 Gew.-Teile Aluminiumdiethylphosphinat 2 mit 1 Gew.-Teil Alkylsiloxan (als 10 %ige Lösung in Ethanol) gemischt und danach 2 h bei 120 C im Trockenschrank getrocknet.

### Beispiel 3

In einem Lödige-Mischer werden 90 Gew.-Teile Aluminiumdiethylphosphinat 2 mit 10 Gew.-Teilen Alkylsiloxan (als 10 %ige Lösung in Ethanol) gemischt und danach 2 h bei 120°C im Trockenschrank getrocknet.

### Beispiel 4

Eine Lösung von 72 g Natriumdiethylphosphinat in 410,6 g Wasser wird auf 80 C erhitzt und anschließend in einem Mikroreaktor nach DE 10 148 615 über einen Zeitraum von 3 h mit 107 g Aluminiumsulfatiösung (4,2 Gew.-% Al) versetzt.

Das Produkt wird durch Zentrifugieren elektrolytfrei gewaschen und 5 h bei 120°C getrocknet.

### Beispiel 5

Eine Lösung von 72 g Natriumdiethylphosphinat und 0,65 g Polyethylenimin in 410,6 g Wasser wird auf 80°C erhitzt und anschließend in einem Mikroreaktor nach DE10148615 über einen Zeitraum von 3 h mit 107 g Aluminiumsulfatlösung (4,2 Gew.-% Al) versetzt.

Das Produkt wird durch Zentrifugieren elektrolytfrei gewaschen und 5 h bei 120°C getrocknet.

### Beispiel 6

4,54 kg handelsübliches Aluminiumdiethylphosphinat 1 (mittlerer Teilchendurchmesser von ca. 22 µm) werden mit 90,72 kg Wasser 50 h lang in einer Sweco M-45 Mühle gemahlen und danach getrocknet. Die BET Oberfläche ist ca. 66 m²/g, die mittlere Teilchengröße 0,023 µm.

### Beispiel 7

Nach der allgemeinen Vorschrift "Herstellung, Verarbeitung und Prüfung von flammgeschützten Polymerformmassen und flammgeschützten Polymerformkörpern" werden 10 Gewichtsteile Aluminiumdiethylphosphinat 2, 30 Gewichtsteile Glasfasern und 59,9 Gewichtsteile Polyamid 6.6 zu einer Formmasse verarbeitet. Als Compatibilizer werden 0,1 Gewichtsteile Aminosilan eingearbeitet.

### Beispiel 8

Nach der allgemeinen Vorschrift "Herstellung, Verarbeitung und Prüfung von flammgeschützten Polymerformmassen und flammgeschützten Polymerformkörpern" werden 10 Gewichtsteile Aluminiumdiethylphosphinat 2, 30 Gewichtsteile Glasfasern und 59 Gewichtsteile Polyamid 6.6 zu einer Formmasse verarbeitet. Als Compatibilizer werden 1 Gewichtsteil Glycidoxysilan eingearbeitet.

### Beispiel 9 (Vergleich)

Nach der allgemeinen Vorschrift "Herstellung, Verarbeitung und Prüfung von flammgeschützten Polymerformmassen und flammgeschützten Polymerformkörpern" wird eine Formmasse bestehend aus 10 Gew.-% Aluminiumdiethylphosphinat 1, 5 Gew.-% Melaminpolyphosphat, 5 Gew.-% Nanoclay, 30 Gew.-% Glasfasern und 50 Gew.-% Polyamid 6.6 hergestellt und zu flammgeschützten Polymerformkörpern verarbeitet. Die nach Underwriter Laboratories UL-94 getesteten Prüfkörper erfüllen die Kategorie V-0.

### Beispiel 10

Nach der allgemeinen Vorschrift "Herstellung, Verarbeitung und Prüfung von flammgeschützten Polymerformmassen und flammgeschützten Polymerformkörpern" wird eine Formmasse bestehend aus 10 Gew.-% Produkt aus Beispiel 2, 30 Gew.-% Glasfasern und 60 Gew.-% Polyamid 6.6 hergestellt und zu flammgeschützten Polymerformkörpern verarbeitet. Die nach Underwriter Laboratories UL-94 getesteten Prüfkörper erfüllen die Kategorie V-0.

### Beispiel 11

Nach der allgemeinen Vorschrift "Herstellung, Verarbeitung und Prüfung von flammgeschützten Polymerformmassen und flammgeschützten Polymerformkörpern" wird eine Formmasse bestehend aus 10 Gew.-% Produkt aus Beispiel 3, 30 Gew.-% Glasfasern und 60 Gew.-% Polyamid 6.6 hergestellt und zu flammgeschützten Polymerformkörpern verarbeitet. Die nach Underwriter Laboratories UL-94 getesteten Prüfkörper erfüllen die Kategorie V-0.

### Beispiel 12

Nach der allgemeinen Vorschrift "Herstellung, Verarbeitung und Prüfung von flammgeschützten Polymerformmassen und flammgeschützten Polymerformkörpern" wird eine Formmasse bestehend aus 10 Gew.-% Produkt aus Beispiel 4, 30 Gew.-% Glasfasern und 60 Gew.-% Polyamid 6.6 hergestellt und zu flammgeschützten Polymerformkörpern verarbeitet. Die nach Underwriter Laboratories UL-94 getesteten Prüfkörper erfüllen die Kategorie V-0.

### Beispiel 13

Nach der allgemeinen Vorschrift "Herstellung, Verarbeitung und Prüfung von flammgeschützten Polymerformmassen und flammgeschützten Polymerformkörpern" wird eine Formmasse bestehend aus 10 Gew.-% Produkt aus Beispiel 5, 30 Gew.-% Glasfasern und 60 Gew.-% Polyamid 6.6 hergestellt und zu flammgeschützten Polymerformkörpern verarbeitet. Die nach Underwriter Laboratories UL-94 getosten Prüfkörper erfüllen die Kategorie V-0.

### Beispiel 14

Nach der allgemeinen Vorschrift "Herstellung, Verarbeitung und Prüfung von flammgeschützten Polymerformmassen und flammgeschützten Polymerformkörpern" wird eine Formmasse bestehend aus 7,5 Gew.-% Produkt aus Beispiel 2, 2,5 Gew.-% Melaminpolyphosphat, 30 Gew.-% Glasfasern und 60 Gew.-% Polyamid 6.6 hergestellt und zu flammgeschützten Polymerformkörpern verarbeitet. Die nach Underwriter Laboratories UL-94 getesteten Prüfkörper erfüllen die Kategorie V-0.

### Beispiel 15

Nach der allgemeinen Vorschrift "Herstellung, Verarbeitung und Prüfung von flammgeschützten Polymerformmassen und flammgeschützten Polymerformkörpern" wird eine Formmasse bestehend aus 7,5 Gew.-% Produkt aus Beispiel 4, 2,5 Gew.-% Melaminpolyphosphat, 30 Gew.-% Glasfasern und 60 Gew.-% Polyamid 6.6 hergestellt und zu flammgeschützten Polymerformkörpern verarbeitet. Die nach Underwriter Laboratories UL-94 getesteten Prüfkörper erfüllen die Kategorie V-0.

### Beispiel 16

Nach der allgemeinen Vorschrift "Herstellung, Verarbeitung und Prüfung von flammgeschützten Polymerformmassen und flammgeschützten Polymerformkörpern" wird eine Formmasse bestehend aus 7,5 Gew.-% Produkt aus Beispiel 5 (5), 2,5 Gew.-% Melaminpolyphosphat, 30 Gew.-% Glasfasern und 60 Gew.-% Polyamid 6.6 hergestellt und zu flammgeschützten Polymerformkörpern verarbeitet. Die nach Underwriter Laboratories UL-94 getesteten Prüfkörper erfüllen die Kategorie V-0.

### Beispiel 17

Nach der allgemeinen Vorschrift "Herstellung, Verarbeitung und Prüfung von flammgeschützten Polymerformmassen und flammgeschützten Polymerformkörpern" wird eine Formmasse bestehend aus 7,5 Gew.-% Produkt aus Beispiel 6 (5a), 2,5 Gew.-% Melaminpolyphosphat, 30 Gew.-% Glasfasern und 60 Gew.-% Polyamid 6.6 hergestellt und zu flammgeschützten Polymerformkörpern verarbeitet. Die nach Underwriter Laboratories UL-94 getesteten Prüfkörper erfüllen die Kategorie V-0.

### Beispiel 18

Nach der allgemeinen Vorschrift "Herstellung, Verarbeitung und Prüfung von flammgeschützten Polymerformmassen und flammgeschützten Polymerformkörpern" wird eine Formmasse bestehend aus Produkt aus Beispiel 7 hergestellt und zu flammgeschützten Polymerformkörpern verarbeitet. Die nach Underwriter Laboratories UL-94 getesteten Prüfkörper erfüllen die Kategorie V-0.

### Beispiel 19

Nach der allgemeinen Vorschrift "Herstellung, Verarbeitung und Prüfung von flammgeschützten Polymerformmassen und flammgeschützten Polymerformkörpern" wird eine Formmasse bestehend aus Produkt aus Beispiel 8 (5c) hergestellt und zu flammgeschützten Polymerformkörpern verarbeitet. Die nach Underwriter Laboratories UL-94 getesteten Prüfkörper erfüllen die Kategorie V-0.

### Beispiel 20

Eine Lösung von 72 g Natriumdiethylphosphinat und 0,65 g Lupasol G20 in 410,6 g Wasser werden auf 80 °C erhitzt und anschließend über einen Zeitraum von 3 h mit 107 g Aluminiumsulfatlösung (4,2Gew.-% Al) versetzt.

Dann wird 1,0 g lineares Natriumdodecylbenzolsulfonat zugegeben. Während die Reaktionslösung 5 h auf ca. 95°C) erhitzt wird, wird eine Mischung von 0,2 g Pinenhydroperoxid (44 % aktiv) und 51,9 g (0,5mol) Styrol mit einer Pumpe zudosiert. Das Produkt wird durch Zentrifugieren elektrolytfrei gewaschen und 5 h bei 120°C getrocknet.

### Beispiel 21

Eine Lösung von 72 g Natriumdiethylphosphinat und 0,65 g Gelatine in 410,6 g Wasser werden auf 80°C erhitzt und anschließend über einen Zeitraum von 3 h mit 107 g Aluminiumsulfatlösung (4,2 Gew.-% Al) versetzt.

Dann wird 1,0 g lineares Natriumdodecylbenzolsulfonat zugegeben. Während die Reaktionslösung 5 h auf ca. 95°C) erhitzt wird, wird eine Mischung von 0,2 g Pinenhydroperoxid (44 % aktiv) und 51,9 g (0,5 mol) Styrol mit einer Pumpe zudosiert. Das Produkt wird durch Zentrifugieren elektrolytfrei gewaschen und 5 h bei 120°C getrocknet.

### Beispiel 22

275 g entionisiertes Wasser werden auf 80°C erhitzt und anschließend über einen Zeitraum von 30 min mit 41 g Aluminiumtri-sec-butylat versetzt. Dabei entsteht ein Niederschlag, der mit einer Lösung aus 1,16 g konzentrierter Salpetersäure und 80 g entionisiertem Wasser über einen Zeitraum von 1 Stunde gelöst werden kann.

Nach dreitägigem Rühren wird das Sol unter Rühren mit 61 g Diethylenphosphinsäure versetzt. Dann wird 1,0 g lineares Natriumdodecylbenzolsulfonat zugegeben. Während die Reaktionslösung 5 h auf ca. 95°C) erhitzt wird, wird eine Mischung von 0,2 g Pinenhydroperoxid (44 % aktiv) und 51,9 g (0,5 mol) Styrol mit einer Pumpe zudosiert. Das Produkt wird durch Zentrifugieren elektrolytfrei gewaschen und 5 h bei 120°C getrocknet.

### Beispiel 23

Mit einem Brabenter-Laborkneter wird eine flammgeschützte Polymerformmasse bestehend aus Polystyrol-Polymer und Produkt aus Beispiel 20 (13) hergestellt und zu flammgeschützten Polymerformkörpern verarbeitet. Die nach Underwriter Laboratories UL-94 getesteten Prüfkörper erfüllen die Kategorie V-0.

### Beispiel 24

Mit einem Brabenter-Laborkneter wird eine flammgeschützte Polymerformmasse bestehend aus Polystyrol-Polymer und Produkt aus Beispiel 21 hergestellt und zu flammgeschützten Polymerformkörpern verarbeitet. Die nach Underwriter Laboratories UL-94 getesteten Prüfkörper erfüllen die Kategorie V-0.

### Beispiel 25

Mit einem Brabenter-Laborkneter wird eine flammgeschützte Polymerformmasse bestehend aus Polystyrol-Polymer und Produkt aus Beispiel 22 (15) hergestellt und zu flammgeschützten Polymerformkörpern verarbeitet. Die nach Underwriter Laboratories UL-94 getesteten Prüfkörper erfüllen die Kategorie V-0.

### Beispiel 26

Ein Gemisch von 40,8 Gew.-Teile Diurethandimethacrylat aus 2,2,4-Trimethylhexamethylendiisocyanat und 2-Hydroxyethylmethacrylat, 24,5 Gew.-Teile Diurethandiacrylat aus Bis-(diisocyanatomethyl)-tricyclodecan und 2-Hydroxyethylacrylat, 4 Gew.-Teile Dodecandioldimethacrylat, 12,3 Gew.-Teile Tetraacryloyloxyethoxypentaerythrit, 17,9 Gew.-Teile Produkt aus Beispiel 6 (23 18) und 0,18 Gew.-Teile 3-Methacryloylpropyltrimethoxysilan wird mit einer Dreiwalze homogenisiert.

Die Transparenzmessung der Paste erfolgt in einem Photometer (Quarzküvette d = 1 mm, Typ: ELKO 2, Fa. Carl. Zeiss, Filter Nr. S51 E67). Als Referenzlösung dient demineralisiertes Wasser, der Messwert für die Transparenz wird direkt am Gerät abgelesen.

Die Transparenz beträgt 70 %.

### Beispiel 27 (Vergleich)

Ein Gemisch von 40,8 Gew.-Teile Diurethandimethacrylat aus 2,2,4-Trimethylhexamethylendiisocyanat und 2-Hydroxyethylmethacrylat, 24,5 Gew.-Teile Diurethandiacrylat aus Bis-(diisocyanatomethyl)-tricyclodecan und 2-Hydroxyethylacrylat, 4 Gew.-Teile Dodecandioldimethacrylat, 12,3 Gew.-Teile Tetraacryloyloxyethoxypentaerythrit, 17,9 Gew.-Teile handelsübliches Aluminiumdiethylphosphinat 1 (mittlerer Teilchendurchmesser von ca. 22 µm) und 0,18 Gew.-Teile 3-Methacryloylpropyltrimethoxysilan wird mit einer Dreiwalze homogenisiert.

Die Transparenzmessung ergibt einen Wert von 40 %.

### Beispiel 28

Zum Produkt aus Beispiel 26 werden 0,1 Gew.-Teile Phenanthrenchinon, 0,2 Gew.-Teile N,N-dimethyl-p-toluidin, 0,02 Gew.-Teile 2,6-Di-tert.-butyl-4-methylbenzol gemischt. In offenen Hohlformen aus Metall wird die Masse 360 s lang mit einem Licht-Polymerisationsgerät (Dentacolor XS der Fa. Heraeus Kulzer GmbH) zu einem Probekörper ausgehärtet. Die nach der allgemeinen Vorschrift bestimmte Teilchengröße des nanoteiligen phosphorhaltigen Flammschutzmittels im flammgeschützten Polymerformkörper beträgt 0,1 µm. Die nach Underwriter Laboratories UL-94 getesteten Prüfkörper erfüllen die Kategorie V-0.

**Tabelle 1**

| Beispiel | | 1 | 2 | 3 |
|---|---|---|---|---|
| Aluminiumdiethylphosphinat 1 | Gew.-Teile | 99,9 | 99 | 90 |
| Alkylsiloxan | Gew.-Teile | 0,1 | 1 | 10 |

**Tabelle 2 (*nicht erfindungsgemäß)**

| Beispiel | | *9 | * 10 | * 11 | * 12 | * 13 | * 14 | *15 | * 16 | * 17 | * 18 | * 19 |
|---|---|---|---|---|---|---|---|---|---|---|---|---|
| Aluminiumdiethylphosphinat 1 | Gew.-% | 10 | - | - | - | - | - | - | - | - | - | - |
| Melaminpolyphosphat | Gew-% | | - | - | - | - | 2,5 | 2,5 | 2,5 | 2,5 | - | - |
| Nanoclay | Gew.-% | 5 | - | - | - | - | - | - | - | - | - | - |
| Produkt aus Beispiel 2 | Gew.-% | 1- | 10 | - | - | - | 7,5 | - | - | - | - | - |
| Produkt aus Beispiel 3 | Gew.-% | - | - | 10 | - | - | - | - | - | - | - | - |
| Produkt aus Beispiel 4 | Gew.-% | - | - | - | 10 | - | - | 7,5 | - | - | - | - |
| Produkt aus Beispiel 5 | Gew.-% | - | - | - | - | 10 | - | - | 7,5 | - | - | - |
| Produkt aus Beispiel 6 | Gew.-% | - | - | - | - | - | - | - | - | 7,5 | - | - |
| Produkt aus Beispiel 7 | Gew.-% | - | - | - | - | - | - | - | - | - | X | - |
| Produkt aus Beispiel 8 | Gew.-% | - | - | - | - | - | - | - | - | - | - | X |
| Glasfasern | Gew.-% | 30 | 30 | 30 | 30 | 30 | 30 | 30 | 30 | 30 | 30 | 30 |
| Polyamid 6.6 | Gew-% | 50 | 60 | 60 | 60 | 60 | 60 | 60 | 60 | 60 | 70 | 70 |
| Mittlerer Teilchendurchmesser d50 | µm | 40,00 | 0,50 | 0,10 | 0,20 | 0,20 | 0,25 | 0,15 | 0,20 | 0,05 | 0,40 | 0,30 |
| GWIT nach IEC 60695-1-13 | °C | -800 | 800 | 800 | 825 | 850 | 800 | 850 | 850 | 850 | 825 | 825 |
| Reissdehnunq nach DIN 53455 | % | 1,6 | 1,9 | 2,1 | 2 | 2,2 | 2,2 | 2 | 2,2 | 2 | 1,9 | 2,2 |
| Schlagzähigkeit nach ISO 180 Charpy | kJ/m2 | 40 | 55 | 60 | 62 | 55 | 55 | 57 | 60 | 57 | 55 | 62 |

**Tabelle 3**

| Beispiel | | * 23 | 24 | * 25 |
|---|---|---|---|---|
| Produkt aus Beispiel 20 | Gew.-% | 54,0 | - | - |
| Produkt aus Beispiel 21 | Gew.-% | - | 54,0 | - |
| Produkt aus Beispiel 22 | Gew.-% | - | - | 54,0 |
| Polystyrol | Gew.-% | 46,0 | 46,0 | 46,0 |
| Mittlerer Teilchendurchmesser d50 | µm | 0,25 | 0,15 | 0,15 |
| P-Gehalt | Gew.-% | 7,2 | 7,2 | 7,2 |

| | | | | |
|---|---|---|---|---|
| (*nicht erfindungsgemäß) | | | | |

**Tabelle 4**

| | |
|---|---|
| Aluminiumdiethylphosphinat 1 | Exolit OP 1230, Fa. Clariant Corporation |
| Aluminiumdiethylphosphinat 2 | Exolit O 930 (TP), Fa. Clariant Corporation |
| Alkylsiloxan | Dynasylan BSM 166, Fa. Degussa |
| Aminosilan | gamma-Aminopropyltriethoxysilan, Silquest A-1100 Silane, Fa. Crompton |
| Glycidoxysilan | 3-Glycidoxypropyltimethoxsilan, Z 6040 Silane, Fa. Dow Corning |
| Nanoclay | Nanofill 919, Fa. Südchemie |
| Polyamid 6.6 | Ultramid A3, Fa. BASF |
| Glasfasern | PPG 3540, Fa. PPG Industries, Inc. |
| Polystyrol | Polystyrol 143 E, Fa. BASF |
| Melaminpolyphosphat | Melapur 200/70, Fa. Ciba SC |
| Polyethylenimin | Lupasol G20, Fa. BASF |

## Patentansprüche

1. Nanoteiliges phosphorhaltiges Flammschutzmittel, **dadurch gekennzeichnet, dass** es ein Phosphinsäuresalz der Formel (I) und/oder ein Diphosphinsäuresalz der Formel (II) und/oder deren Polymere enthält, 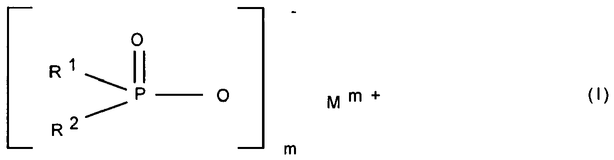 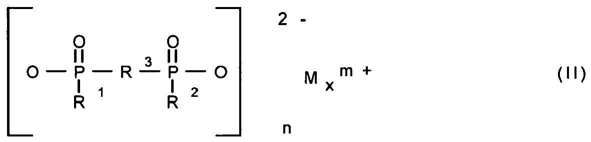 worin
R¹, R² gleich oder verschieden sind und Methyl, Ethyl, n-Propyl, iso-Propyl, n-Butyl, tert.-Butyl, n-Pentyl und / oder Phenyl bedeuten.
R³ C₁-C₁₀-Alkylen, linear oder verzweigt, C₆-C₁₀-Arylen, -Alkylarylen oder -Arylalkylen;
M Mg, Ca, Al, Sb, Sn, Ge, Ti, Fe, Zr, Zn, Ce, Bi, Sr, Mn, Li und/oder eine protonierte Stickstoffbase;
m 1 bis 4;
n 1 bis 4;
x 1 bis 4 bedeuten, seine Oberfläche nach BET 2 bis 1.000 qm/g beträgt und 0,01 bis 10 Gew.-% Schutzkolloide und/oder Kristallisationsmodifikatoren enthält, wobei es sich dabei um polymere quaternäre Ammoniumsalze, Gallussäure, Gelatine, Polyethylensorbitmonooleat, Natriumcarboxymethylcellulose, Polyvinylpyrrolidon und/oder Natriumpyrophosphat handelt, und dass seine mittlere Teilchengröße 1 bis 1.000 nm (d₅₀; wie in der Beschreibung ermittelt) beträgt.

2. Nanoteiliges phosphorhaltiges Flammschutzmittel nach Anspruch 1, **dadurch gekennzeichnet, dass** R³ Methylen, Ethylen, n-Propylen, iso-Propylen, n-Butylen, tert.-Butylen, n-Pentylen, n-Octylen oder n-Dodecylen; Phenylen oder Naphthylen; Methyl-phenylen, Ethyl-phenylen, tert.-Butylphenylen, Methyl-naphthylen, Ethyl-naphthylen oder tert.-Butylnaphthylen; Phenyl-methylen, Phenyl-ethylen, Phenyl-propylen oder Phenyl-butylen bedeutet.

3. Verfahren zur Herstellung von nanoteiligem phosphorhaltigem Flammschutzmittel nach Anspruch 1 oder 2, **dadurch gekennzeichnet, dass**
A) eine Aluminium-/Zink-/Titan-/Zirkonium- und/oder Zinnverbindung mit
B) einer löslichen Verbindung der Phosphinsäure der Formel (I) und/oder ein Diphosphinsäure der Formel (II) und/oder deren Polymere 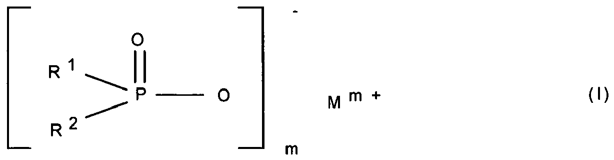 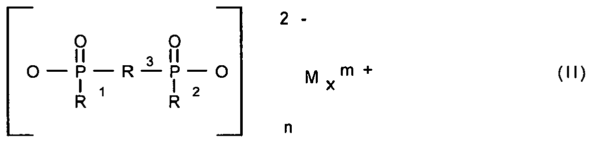 worin
R¹, R² gleich oder verschieden sind und Methyl, Ethyl, n-Propyl, iso-Propyl, n-Butyl, tert.-Butyl, n-Pentyl und / oder Phenyl bedeuten.
R³ C₁-C₁₀-Alkylen, linear oder verzweigt, C₆-C₁₀-Arylen, -Alkylarylen oder -Arylalkylen;
M Na oder K;
m 1 bis 4;
n 1 bis 4;
x 1 bis 4 bedeuten und seine Oberfläche nach BET 2 bis 1.000 qm/g beträgt
und
C) 0,01 bis 10 Gew.-% Schutzkolloide und/oder Kristallisationsmodifikatoren zur Reaktion gebracht werden und wahlweise von dem Lösungsmittel und/oder von Nebenkomponenten abgetrennt, getrocknet und gemahlen wird, wobei es sich bei den Schutzkolloiden und/oder Kristallisationsmodifikatoren um polymere quaternäre Ammoniumsalze, Gallussäure, Gelatine, Polyethylensorbitmonooleat, Natriumcarboxymethylcellulose, Polyvinylpyrrolidon, und/oder Natriumpyrophosphat handelt.

4. Verfahren zur Herstellung von nanoteiligem phosphorhaltigem Flammschutzmittel nach Anspruch 1 oder 2, **dadurch gekennzeichnet, dass**
A) eine Aluminium-/Titan-/Zink-/Zinn- und/oder Zirkoniumverbindung hydrolysiert und dann
B) mit einer löslichen Verbindung der Phosphinsäure der Formel (I) und/oder einer Diphosphinsäure der Formel (II) und/oder deren Polymere 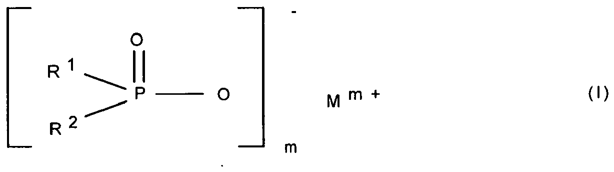 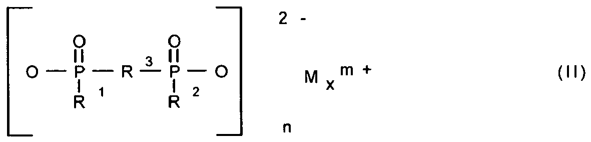 worin
R¹, R² gleich oder verschieden sind und Methyl, Ethyl, n-Propyl, iso-Propyl, n-Butyl, tert.-Butyl, n-Pentyl und / oder Phenyl bedeuten.
R³ C₁-C₁₀-Alkylen, linear oder verzweigt, C₆-C₁₀-Arylen, -Alkylarylen oder -Arylalkylen;
M Na oder K;
m 1 bis 4;
n 1 bis 4;
x 1 bis 4 bedeuten und seine Oberfläche nach BET 2 bis 1.000 qm/g beträgt,
und
C) 0,01 bis 10 Gew.-% Schutzkolloide und/oder Kristallisationsmodifikatoren, wobei es sich bei den Schutzkolloiden und/oder Kristallisationsmodifikatoren um polymere quaternäre Ammoniumsalze, Gallussalze, Gelatine, Polyethylensorbitmonooleat, Natriumcarboxymethylcellulose, Polyvinylpyrrolidon, und/oder Natriumpyrophosphat handelt, zur Reaktion gebracht werden und wahlweise von dem Lösungsmittel und/oder von Nebenkomponenten abgetrennt, getrocknet und gemahlen wird,
umgesetzt wird oder bereits in deren Gegenwart hydrolysiert wird und wahlweise von dem Lösungsmittel abgetrennt, von Nebenkomponenten abgetrennt, getrocknet und gemahlen wird.

5. Verfahren nach Anspruch 3 oder 4, **dadurch gekennzeichnet, dass** die Reaktion in einem Mikroreaktor und/oder Minireaktor ausgeführt wird.

6. Verfahren nach einem oder mehreren der Ansprüche 3 bis 5, **dadurch gekennzeichnet, dass** die Komponenten A) und B) im Verhältnis A) zu B) von 100 zu 1 bis 1 zu 100 Ladungsäquivalent Metall/Mol Phosphor eingesetzt werden.

7. Verfahren nach einem oder mehreren der Ansprüche 3 bis 6, **dadurch gekennzeichnet, dass** der bevorzugte Durchsatz (Volumenstrom) in einem Mikroreaktor 10⁻³ l/h bis 10³ l/h und in einem Minireaktor 10² l/h bis 10⁵ l/h, beträgt.

8. Verfahren zur Herstellung von nanoteiligem phosphorhaltigem Flammschutzmittel nach Anspruch 1 oder 2, **dadurch gekennzeichnet, dass** nicht nanoteiliges phosphorhaltigen Flammschutzmittel der Nassmahlung unterworfen wird und dadurch seine Teilchengröße auf 1 bis 1000 nm, gebracht wird, unter Zusatz von 0,01 bis 10 Gew.-% Schutzkolloide und/oder Kristallisationsmodifikatoren, und wahlweise von dem Lösungsmittel abgetrennt, von Nebenkomponenten abgetrennt, getrocknet und gemahlen wird.

9. Verfahren nach Anspruch 8, **dadurch gekennzeichnet, dass** das nicht nanoteilige phosphorhaltige Flammschutzmittel in einer Konzentration von 0,1 bis 50 Gew.-% in einem Lösungsmittel dispergiert wird, wobei die Temperatur 0 bis 300°C, die Reaktionszeit 1*10⁻⁷ bis 1*10² h und der Druck 1 und 200 MPa beträgt.

10. Verfahren nach einem oder mehreren der Ansprüche 3 bis 9, **dadurch gekennzeichnet, dass** die Abtrennung des nanoteiligen phosphorhaltigen Flammschutzmittels vom Lösungsmittel durch Filtration, Sedimentation, Zentrifugation erfolgt.

11. Verfahren nach einem oder mehreren der Ansprüche 3 bis 10, **dadurch gekennzeichnet, dass** die Trocknung einstufig oder mehrstufig bei einem Druck von 10 Pa bis 100 MPa, über eine Zeitdauer von 0,01 bis 1000 h und einer Temperatur von -20 bis +500°C erfolgt.

12. Verwendung von nanoteiligem phosphorhaltigem Flammschutzmittel nach Anspruch 1 oder 2 in Polymerformmassen, Polymerformkörpern, Polymerfäden, Polymerfilmen und/oder Polymerfasern.

13. Verwendung von nanoteiligem phosphorhaltigem Flammschutzmittel nach Anspruch 1 oder 2 in flammgeschützten Beschichtungen, Formulierungen zur Herstellung von flammgeschützten Beschichtungen (Gelcoats, Intumeszenz-Lacke, Klarlacke, Topcoats, Klebern, Adhäsionsbeschichtungen) und Imprägniermitteln von porösen Formkörpern wie Holz, Spanplatten, Kork, Papier und Textilien.

## Claims

1. A nanoparticulate phosphorus-containing flame retardant system, which comprises a phosphinic salt of the formula (I) and/or a diphosphinic salt of the formula (II) and/or their polymers, 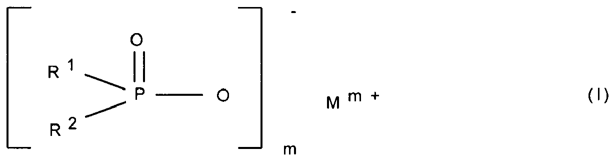 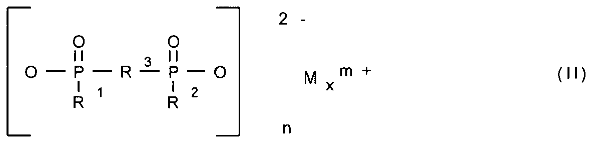 where
R¹ and R² are identical or different and are methyl, ethyl, n-propyl, isopropyl, n-butyl, tert-butyl, n-pentyl and/or phenyl;
R³ is C₁-C₁₀-alkylene, linear or branched, C₆-C₁₀-arylene, -alkylarylene, or -arylalkylene;
M is Mg, Ca, Al, Sb, Sn, Ge, Ti, Fe, Zr, Zn, Ce, Bi, Sr, Mn, Li and/or a protonated nitrogen base;
m is from 1 to 4;
n is from 1 to 4;
x is from 1 to 4, its BET surface area being from 2 to 1000 m²/g, where it comprises from 0.01 to 10% by weight of protective colloids and/or crystallization modifiers, where the materials here are polymeric quaternary ammonium salts, gallic acid, gelatin, polyethylene sorbitol monooleate, sodium carboxymethylcellulose, polyvinylpyrrolidone and/or sodium pyrophosphate, where its median particle size is from 1 to 1000 nm (d₅₀; determined as in the description).

2. The nanoparticulate phosphorus-containing flame retardant system as claimed in claim 1, wherein R³ is methylene, ethylene, n-propylene, isopropylene, n-butylene, tert-butylene, n-pentylene, n-octylene, n-dodecylene, phenylene, naphthylene, methylphenylene, ethylphenylene, tert-butylphenylene, methylnaphthylene, ethylnaphthylene, tert-butylnaphthylene, phenylmethylene, phenylethylene, phenylpropylene, or phenylbutylene.

3. A process for the preparation of a nanoparticulate phosphorus-containing flame retardant system as claimed in claim 1 or 2, which comprises reacting
A) an aluminum/zinc/titanium/zirconium compound and/or tin compound with
B) a soluble compound of the phosphinic acid of the formula (I) and/or a diphosphinic acid of the formula (II) and/or polymers thereof 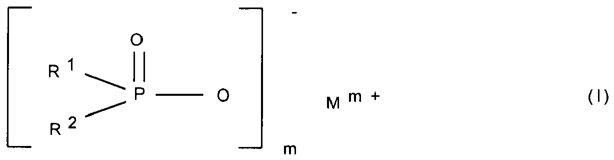 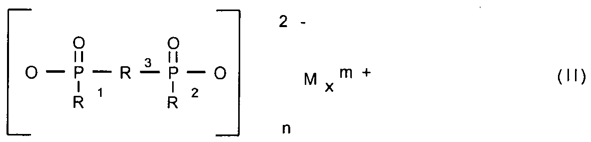 where
R¹ and R² are identical or different and are methyl, ethyl, n-propyl, isopropyl, n-butyl, tert-butyl, n-pentyl and/or phenyl;
R³ is C₁-C₁₀-alkylene, linear or branched, C₆-C₁₀-arylene, -alkylarylene, or -arylalkylene;
M is Na or K;
m is from 1 to 4;
n is from 1 to 4;
x is from 1 to 4, its BET surface area being from 2 to 1000 m²/g, and
C) from 0.01 to 10% by weight of protective colloids and/or crystallization modifiers and, if desired, isolating from the solvent and/or from ancillary components, drying and grinding, where the protective colloids and/or crystallization modifiers are polymeric quaternary ammonium salts, gallic acid, gelatin, polyethylene sorbitol monooleate, sodium carboxymethylcellulose, polyvinylpyrrolidone and/or sodium pyrophosphate.

4. A process for the preparation of a nanoparticulate phosphorus-containing flame retardant system as claimed in claims 1 or 2, which comprises
A) hydrolyzing an aluminum/titanium/zinc/tin compound and/or zirconium compound, and then
B) reacting the product with a soluble compound of phosphinic acid of the formula (I) and/or a diphosphinic acid of the formula (II) and/or polymers thereof 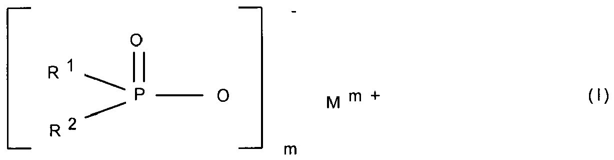 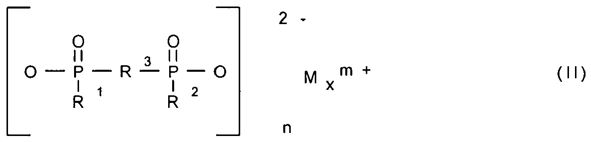 where
R¹ and R² are identical or different and are methyl, ethyl, n-propyl, isopropyl, n-butyl, tert-butyl, n-pentyl and/or phenyl;
R³ is C₁-C₁₀-alkylene, linear or branched, C₆-C₁₀-arylene, -alkylarylene, or -arylalkylene;
M is Na or K;
m is from 1 to 4;
n is from 1 to 4;
x is from 1 to 4, its BET surface area being from 2 to 1000 m²/g, and
C) from 0.01 to 10% by weight of protective colloids and/or crystallization modifiers, where the protective colloids and/or crystallization modifiers are polymeric quaternary ammonium salts, gallic acid, gelatin, polyethylene sorbitol monooleate, sodium carboxymethylcellulose, polyvinylpyrrolidone and/or sodium pyrophosphate and, if desired, isolating from the solvent and/or from ancillary components, drying and grinding,
or carrying out the hydrolysis itself in their presence and, if desired, isolating from the solvent, isolating from ancillary components, drying and grinding.

5. The process as claimed in claim 3 or 4, wherein the reaction is conducted in a microreactor and/or minireactor.

6. The process as claimed in one or more of claims 3 to 5, wherein the metal charge equivalent/mol of phosphorus ratio A):B) in which components A) and B) are used is from 100:1 to 1:100.

7. The process as claimed in one or more of Claims 3 to 6, wherein the preferred throughput (volume flow) in a microreactor is from 10⁻³ l/h to 10³ l/h, and in a minireactor is from 10² l/h to 10⁵ l/h.

8. A process for the preparation of a nanoparticulate phosphorus-containing flame retardant system as claimed in claim 1 or 2, which comprises wet-grinding of a non-nanoparticulate phosphorus-containing flame retardant system and thus bringing its particle size to from 1 to 1000 nm, with addition of from 0.01 to 10% by weight of protective colloids and/or crystallization modifiers, and optionally isolating the product from the solvent, isolating it from ancillary components, drying it, and grinding it.

9. The process as claimed in claim 8, wherein the non-nanoparticulate phosphorus-containing flame retardant system is dispersed at a concentration of from 0.1 to 50% by weight in a solvent, the temperature being from 0 to 300°C, the reaction time being from 1*10⁻⁷ to 1*10² h, and the pressure being from 1 to 200 MPa.

10. The process as claimed in one or more of claims 3 to 9, wherein the isolation of the nanoparticulate phosphorus-containing flame retardant system from the solvent takes place via filtration, sedimentation, or centrifuging.

11. The process as claimed in one or more of claims 3 to 10, wherein the drying takes place in one or more stages at a pressure of from 10 Pa to 100 MPa, for a period of from 0.01 to 1000 h, and at a temperature of from -20 to +500°C.

12. The use of a nanoparticulate phosphorus-containing flame retardant system as claimed in claim 1 or 2 in polymer molding compositions, in polymer moldings, in polymer filaments, in polymer films, and/or in polymer fibers.

13. The use of a nanoparticulate phosphorus-containing flame retardant system as claimed in claim 1 or 2 in flame-retardant coatings, formulations for the preparation of flame-retardant coatings (gel coats, intumescence lacquers, clear lacquers, topcoats, adhesives, adhesion coatings) and of impregnating compositions for porous moldings, such as wood, particle board, cork, paper, and textiles.

## Revendications

1. Agent ignifuge phosphoré nanoparticulaire, **caractérisé en ce qu'**il contient un sel d'acide phosphinique de formule (I) et/ou un sel d'acide diphosphinique de formule (II) et/ou leurs polymères, 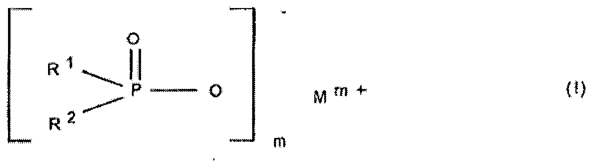 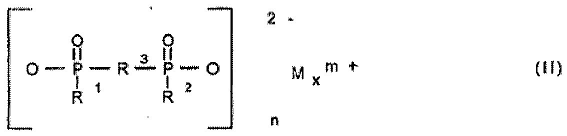 formules dans lesquelles
R¹, R² sont identiques ou différents et représentent les groupes méthyle, éthyle, n-propyle, iso-propyle, n-butyle, tert-butyle, n-pentyle et/ou phényle,
R³ représente un groupe alkylène en C₁-C₁₀ linéaire ou ramifié, arylène en C₆-C₁₀, alkylarylène en C₆-C₁₀ ou arylalkylène en C₆-C₁₀ ;
M représente Mg, Ca, Al, Sb, Sn, Ge, Ti, Fe, Zr, Zn, Ce, Bi, Sr, Mn, Li et/ou une base azotée protonée ;
m représente 1 à 4 ;
n représente 1 à 4 ;
x représente 1 à 4,
sa surface selon BET vaut de 2 à 1 000 m²/g et il contient de 0,01 à 10 % en poids de colloïdes protecteurs et/ou de modificateurs de cristallisation, ceux-ci consistant en sels d'ammonium quaternaire polymères, acide gallique, gélatine, mono-oléate polyoxyéthylénique de sorbitanne, carboxyméthylcellulose sodique, polyvinylpyrrolidone et/ou pyrophosphate de sodium, et **en ce que** sa taille moyenne de particule vaut de 1 à 1 000 nm (d₅₀ ; comme déterminée dans la description).

2. Agent ignifuge phosphoré nanoparticulaire selon la revendication 1, **caractérisé en ce que** R³ représente le groupe méthylène, éthylène, n-propylène, isopropylène, n-butylène, tert-butylène, n-pentylène, n-octylène ou n-dodécylène ; phénylène ou naphtylène ; méthyl-phénylène, éthyl-phénylène, tert-butylphénylène, méthyl-naphtylène, éthyl-naphtylène ou tert-butyl-naphtylène ; phényl-méthylène, phényl-éthylène, phényl-propylène ou phényl-butylène.

3. Procédé pour la production d'agent ignifuge phosphoré nanoparticulaire selon la revendication 1 ou 2, **caractérisé en ce que**
A) on met en réaction un composé d'aluminium/zinc/titane/zirconium et/ou étain avec
B) un composé soluble de l'acide phosphinique de formule (I) et/ou un acide diphosphinique de formule (II) et/ou leurs polymères 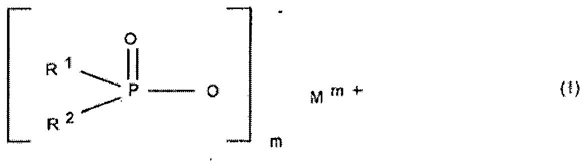 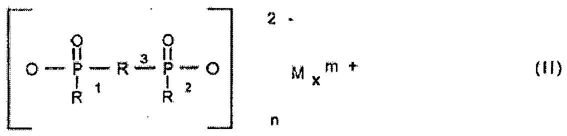 formules dans lesquelles
R¹, R² sont identiques ou différents et représentent les groupes méthyle, éthyle, n-propyle, iso-propyle, n-butyle, tert-butyle, n-pentyle et/ou phényle,
R³ représente un groupe alkylène en C₁-C₁₀ linéaire ou ramifié, arylène en C₆-C₁₀, alkylarylène en C₆-C₁₀ ou arylalkylène en C₆-C₁₀ ;
M représente Na ou K ;
m représente 1 à 4 ;
n représente 1 à 4 ;
x représente 1 à 4,
et sa surface selon BET vaut de 2 à 1 000 m²/g,
et
C) 0,01 à 10 % en poids de colloïdes protecteurs et/ou modificateurs de cristallisation, et en option on sépare le produit d'avec le solvant et/ou des composants secondaires, on le sèche et on le broie, les colloïdes protecteurs et/ou modificateurs de cristallisation consistant en sels d'ammonium quaternaire polymères, acide gallique, gélatine, mono-oléate polyoxyéthylénique de sorbitanne, carboxyméthylcellulose sodique, polyvinylpyrrolidone et/ou pyrophosphate de sodium.

4. Procédé pour la production d'agent ignifuge phosphoré nanoparticulaire selon la revendication 1 ou 2, **caractérisé en ce que**
A) on hydrolyse un composé d'aluminium//titane/zinc/ étain et/ou zirconium et ensuite
B) on le fait réagir avec un composé soluble de l'acide phosphinique de formule (I) et/ou un acide diphosphinique de formule (II) et/ou leurs polymères 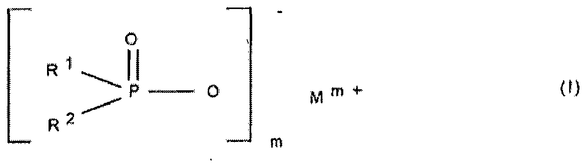 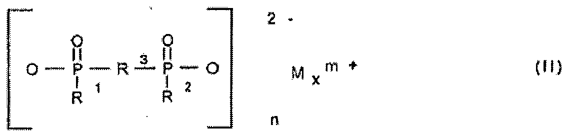 formules dans lesquelles
R¹, R² sont identiques ou différents et représentent les groupes méthyle, éthyle, n-propyle, iso-propyle, n-butyle, tert-butyle, n-pentyle et/ou phényle,
R³ représente un groupe alkylène en C₁-C₁₀ linéaire ou ramifié, arylène en C₆-C₁₀, alkylarylène en C₆-C₁₀ ou arylalkylène en C₆-C₁₀ ;
M représente Na ou K ;
m représente 1 à 4 ;
n représente 1 à 4 ;
x représente 1 à 4,
et sa surface selon BET vaut de 2 à 1 000 m²/g,
et
C) 0,01 à 10 % en poids de colloïdes protecteurs et/ou modificateurs de cristallisation, les colloïdes protecteurs et/ou modificateurs de cristallisation consistant en sels d'ammonium quaternaire polymères, acide gallique, gélatine, mono-oléate polyoxyéthylénique de sorbitanne, carboxyméthylcellulose sodique, polyvinylpyrrolidone et/ou pyrophosphate de sodium et en option on sépare le produit d'avec le solvant et/ou des composants secondaires, on le sèche et on le broie,
ou on l'hydrolyse déjà en leur présence et en option on sépare le produit d'avec le solvant et/ou des composants secondaires, on le sèche et on le broie.

5. Procédé selon la revendication 3 ou 4, **caractérisé en ce que** la réaction est effectuée dans un microréacteur et/ou miniréacteur.

6. Procédé selon une ou plusieurs des revendications 3 à 5, **caractérisé en ce qu'**on utilise les composants A) et B) en un rapport A) à B) de 100 : 1 à 1 : 100 équivalents de charges de métal/moles de phosphore..

7. Procédé selon une ou plusieurs des revendications 3 à 6, **caractérisé en ce que** le débit (débit volumique) préféré vaut de 10⁻³ l/h à 10³ l/h dans un microréacteur et de 10² l/h à 10⁵ l/h dans un miniréacteur.

8. Procédé pour la production d'agent ignifuge phosphoré nanoparticulaire selon la revendication 1 ou 2, **caractérisé en ce qu'**on soumet au broyage par voie humide un agent ignifuge phosphoré non nanoparticulaire et on porte ainsi sa taille de particule à 1 à 1 000 nm, avec addition de 0,01 à 10 % en poids de colloïdes protecteurs et/ou de modificateurs de cristallisation, et en option on le sépare du solvant, on le sépare de composants secondaires, on le sèche et on le broie.

9. Procédé selon la revendication 8, **caractérisé en ce qu'**on disperse dans un solvant l'agent ignifuge phosphoré non nanoparticulaire à une concentration de 0,1 à 50 % en poids, la température valant de 0 à 300 °C, le temps de réaction allant de 1*10⁻⁷ à 1*10² h et la pression valant de 1 à 200 MPa.

10. Procédé selon une ou plusieurs des revendications 3 à 9, **caractérisé en ce que** la séparation de l'agent ignifuge phosphoré nanoparticulaire d'avec le solvant s'effectue par filtration, sédimentation, centrifugation.

11. Procédé selon une ou plusieurs des revendications 3 à 10, **caractérisé en ce que** le séchage s'effectue en une étape ou plusieurs étapes sous une pression de 10 Pa à 100 MPa, pendant une durée de 0,01 à 1 000 h et à une température de -20 à +500 °C.

12. Utilisation d'agent ignifuge phosphoré nanoparticulaire selon la revendication 1 ou 2 dans des matières à mouler polymères, des corps moulés polymères, des fils polymères, des films polymères et/ou des fibres polymères.

13. Utilisation d'agent ignifuge phosphoré nanoparticulaire selon la revendication 1 ou 2 dans des revêtements ignifugés, des compositions ignifugées pour la production de revêtements (gelcoats, peintures intumescentes, vernis, couches de finition, colles, revêtements adhésifs) ignifugés et des agents d'imprégnation ignifugés pour corps façonnés poreux tels que bois, panneaux de particules, liège, papier et textiles.
